# EUROPEAN PATENT APPLICATION

(11) **EP 0 727 548 A1**
(43) Date of publication of application: **21.08.1996**
(21) Application number: 95500015.3
(22) Date of filing: 15.02.1995
(51) Int. Cl.: E04F 19/02, B60R 19/42, E04B 1/94

(54) **Procedure for the application of protection coating on walls, pillars and similar surfaces**

(71) Applicant: SERVICIOS CARLOS Y ALFONSO, S.L., E-01006 Vitoria (ES)
(72) Inventor: Valderrama Garcia, Alfonso, 01011 Vitoria-Alava (ES); Valderrama Garcia, Juan Carlos, 01013 Vitoria-Alava (ES)
(74) Representative: Gomez-Acebo y Pombo, José Miguel

(57) **Abstract**

A procedure for the application of protection coating on wall, pillar and similar surfaces, which consistes on the application of a protection coat (9) over surface (3) to be covered, said coat being comprised of cellular material strips (1) and coating strips (2) previously interjoined, joining coat (9) to surface (3) by means of an adhesive.

## Description

This invencion refers to a procedure for the application of protection coating on wall, pillar and similar surfaces, especially intended to servir as protection element against possible chafing of vehicles on said surfaces in locations or precincts in which vehicles or automobiles may circulate or move, such as garages, workshops, vehicle concessionary premises, etc.

In locations of the indicated type, chafing of vehicles on wall and pillar surfaces are frequently produced. Generally, these chafings are always produced on the same zones or points in the precincts. In any case, the consequences of these chafings are the possible erosions which are produced on wall or pillar surfaces, and fundamentally, the imperfections caused on the body of the vehicles.

Well known at the moment are the installation of protection barriers which prevent the impact or chafing of wall and pillar surfaces but which do not prevent the vehicle body from being subjected to imperfections when a knock or chafing is produced against said barriers. In other words, that the system of barriers indicated, act as protection elements in the precincts, but not of the vehicles. Additionally, the placement of these barriers demands installation work which is generally expensive.

The purpose of the present invention is a procedure for the application of protection coatings on surfaces of locations and precincts in which automobile vehicles may move, which permit the obtention of an effective protection effect, both the coated surfaces and the vehicles which might impinge on them.

The procedure of the invention includes the formation of a flexible and fireproof protection element together with the application and attachment of said element on the surfaces to be protected.

This element is basically made up of a fireproof, celular material strips, elastically deformable, and of flexible and fireproof laminar strip coatings,

The celular material strips, obtained by forming or cutting, shall have a minimum 3 cm thickness and a width comprised between 0,5 and 1,5 m and may have an indefined length which shall be subsequently cut to the suitable dimension of the surface to be coated.

The laminar strip coats shall have a length and width which is slightly greater than that of the celular material strips which are to be applied. These laminar strip coats may be basically plastic laminates or similar laminates such as the one known under the name of "skay" or any other type of similar laminate. The said laminar strips shall be quipped throughtout their extension with a great amount of fine perforations which are practically imperceptible and which ensure the air permability of the strip.

Once the the coating and celular material strips are cut, proceed to apply said coating strip on one of the major surfaces of the celular material strip, to which it is joined by means of hat welding. This joining is conducted in such a way that the borders and edges of the two strips coincide remaining applied on each other or on the surface zones to be coated, whilst on the remainder ot the borders, the coating strip shall project as regards the celular material strip with a part which shall be pressed down and attached on the borders of the celular material strip, also by means of heat welding, finally cutting the excess parts which might project from the coating laminate as regards the celular material strip.

Once these two components have been joined, the protection element is obtained, which is applied through the free surface of the celular material strip, on the surface to be coated, simultaneously attached by means of a contact adhesive. Finally, on the joint lines which might exist between the borders adjacent to the coating element, rabbet tapes are applied which might be of the same material as the coating strip.

In order that that the stages, characteristics and advantages of the procedure of the invention be more readily understood, a more detailed description is herewith given of the same, with the help of the attached drawings in which the different stages fo the procedure is schematically represented, with nonlimitative exemplary nature.

In the drawings:
Figure 1 is a perspective view of a coating strip and an elastic material strip, formed and cut to carry out the process of the invention.
Figure 2 is a cross seccional view of the protection element, formed by the celular material strip and the coating strip.
Figure 3 is a partially side elevational view of a pillar on which the coating of the invention has been applied.
Figure 4 is a cross seccional view of the pillar, in greater scale, taken through line IV-IV of figure 3.
Figure 5 corresponds to detail A of figure 1, in greater scale.

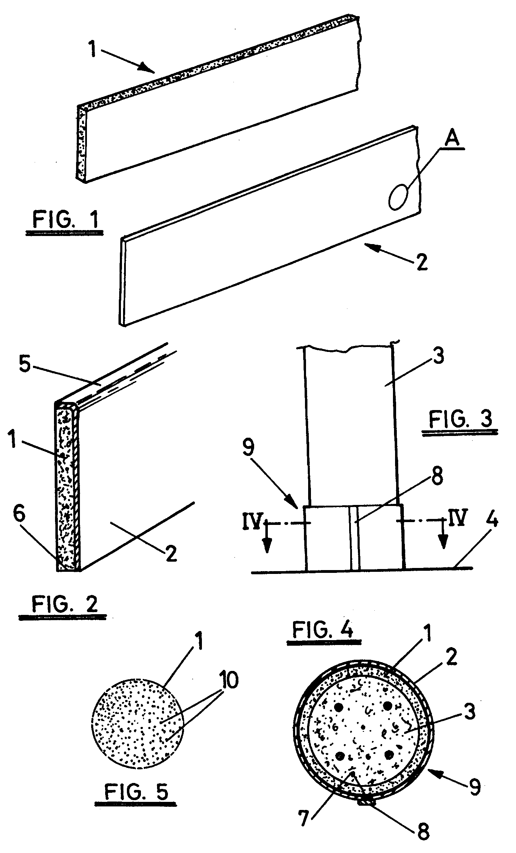

As shown in figure 1, the procedure of the invention is initiated with the preparation of a protection element, which is made up of a fireproof and celular material strip 1, which is elastically deformable, and by a flexible and waterproof laminar strip coating, 2.

The celular material strip 1 shall have a minimum 3 cm thickness and an approximate width of 1 m, which shall correspond to the height reached by the coating on the parameter which is to be protected. The coating strip 2 is of a slightly superior dimension to that of the celular material strip 1.

The coating strip 2 is applied on one of the greater surfaces of the celular material strip 1, on which it is attached by means of heat welding. On this attachment, the borders and edges of the two strips which are to remain on the surfaces of the zone to be protected are made to coincide, or else made to form joint unions one with the other.

In the example described, the protection element formed by the two strips are intended to protect a pillar 3, figures 3 and 4, because of which, the two strips 1 and 2 shall coincide throughout the length of one of the longitudinal borders of the protection element, which shall be the one which abutts on the floor 4 of the location or precincts, and by its transversal borders which will remain end to end when surrounding the pillar 3. The coating laimnate 2 shall project throughout the length of one of the longitudinal borders of strip 1 in a part 5, figure 2, which is pressed down on the longitudinal border adjacent to strip 1 to which it is joined by means of hat welding, in order to cover this border which shall be the on view border of the protection coating.

Once the pretection element represented in figure 2 has been formed, it is applied on the surface to be coated, through the free surface of the celular material strip 1, attaching it by means of a contact adhesive. The lower border 6 of the protection element, lacking a coating laminate 2, shall abut on floor 4 of the precincts. The transversal borders which are also free of coating laminate 2, shall remain end to end, forming a joining line or joint 7, which may remain concealed by means of a strip 8 of the same material as the coating strip 2.

In this way, pillar 3 remains, on its lower part on which the vehicles may impinge, protected by means of a coating 9 which will avoid, not only chafing on the pillar, but also deteriorations on the body of the vehicle.

As may be observed from figure 5, the coating laminate 2 is equipped with a great amount of small orifices 10, which are practically imperceptible, by means of which the air permability of said strip is achieved. With this structure, when a car abuts, chafes or knocks on the protection coating causing its depression, the latter recovers its original situation due to the elastic capacity of recovery fo the celular material coat 1, on the allowance of free input of air through orifices 10.

In the same way, the procedure of the invention allows the coating of flat surfaces, on which the free transversal borders of strip 1 may be also concealed by the coating strip 2.

Logically, the thickness of the celular material strip 1 and the length and width of the protection element obtained with both strips shall depend on the protection capacity desired to be achieved and on the surface to be protected.

## Claims

1. A procedure for the application of protection coatings on wall, pillar and similar surfaces, characterized by being comprised of the following stages: forming and/or cutting of fireproof celular material strips (1), elastically deformable, to the dimension of the surface to be coated; cutting of laminar strips (2) of a flexible material coating, also of fireproof nature, with length and width slightly greater than those of the celular material strips; application and joining by mans of heat welding of the coating strip (2) to one of the greater surfaces of the celular material strip (1) in such a way that both strips coincide by their borders and edges (6) which remain applied one with the other or over the zones of the surfaces to be coated, projecting from the coating strip (2) as regards the rest of the border of the celular materials strip (1), to be pressed down and attached (5) on the same, also by means of heat welding, cutting the excess partes; application and attachment by means of contact adhesive of the protection element (9) formed by both assembly strips (1,2) through the greater surface and free border (6) of the celular material strip (1), on the coating surface; and the application of a strip (8) of the same laminar coating material (2) on the joints or union lines to act as rabbet tapes.

2. A procedure according to claim 1, characterized by the celular material strips (1) which are of a thickness preferably grater than 3 cm and width comprised between 0,5 and 1,5 m.

3. A procedure according to claim 1, characterized by the coating strip (2) which is equipped throughout all its extension with a great amount of fine perforations (10) which ensure the air permeability of said strip, consisting on the application of a protection coat (9) on the coating surface (3), said coat being made up of celular material strips (1) and coating strips (2) previously interjoined, joining coat (9) to surface (3) by means of an adhesive.
